# EUROPEAN PATENT APPLICATION

(11) **EP 2 496 047 A2**
(43) Date of publication of application: **05.09.2012**
(21) Application number: 10827046.3
(22) Date of filing: 26.10.2010
(51) Int. Cl.: H04W 88/02, H04W 4/02

(54) **PORTABLE TERMINAL AND METHOD FOR MANAGING IMAGE PHOTOGRAPHED BY PORTABLE TERMINAL**

(30) Priority: 27.10.2009 KR 20090102022; 11.06.2010 KR 20100055428
(71) Applicant: Kim, Jongho, Namyangju-shi, Kyungki-do 472-060 (KR)
(72) Inventor: Kim, Jongho, Namyangju-shi, Kyungki-do 472-060 (KR)
(74) Representative: Petraz, Gilberto Luigi
(86) International application number: PCT/KR2010/007365
(87) International publication number: WO 2011/052962

(57) **Abstract**

A portable terminal according to the present invention includes an image photographing unit for photographing image, a storing unit for storing the image photographed in the photographing unit as image data, a transmission mode setup unit settable to an automatic transmission mode for automatically transmitting the image data to the address that is preset by a user when the user photographs the image, or a manual transmission mode for transmitting the image data to the address that is input later by a user after the image data is stored in the storing unit, a display unit for displaying the image data and a transmission mode set in the transmission setup unit, a wireless communication unit for transmitting the image data to the address through wireless communication, and the control unit controls the wireless communication unit such that when the automatic transmission mode is set in the transmission mode setup unit, the automatic transmission mode is stored in the storing unit as transmission mode setup data, the address preset in the automatic transmission mode is stored as setup address data, and image data is stored in the storing unit whenever a user photographs the image through the image photographing unit and at the same time is transmitted automatically to the setup address stored in the storing unit. Accordingly, a user can transmit easily the image photographed in the portable terminal to a personal computer or a portable terminal of other users.

## Description

### CROSS-REFERENCE TO RELATED APPLICATION

This application claims under 35 U.S.C. §119 (a) the benefit of Korean Patent Application No. filed the entire contents of which are incorporated herein by reference.

### BACKGROUND

### (a) Technical Field

The present disclosure relates to a portable terminal and a managing method of image photographed by the portable terminal. More particularly, it relates to a portable terminal and a managing method of image photographed by the portable terminal, capable of transmitting automatically the image photographed by a portable terminal to an address preset by a user.

### (b) Background Art

Generally, a portable terminal that can be carried by hands serves various functions such as voice and image conversation function, information input and output function, and data storing function, and the like.

As a portable terminal, a personal mobile communication service terminal, a personal digital assistants (PDA), a smart phone and a wireless LAN terminal are referred.

The portable terminal had only a voice conversation function and a short sentence message transmission function at an initial stage; however, recently, it has been developed to implement various functions such as a stop and mobile image photographing function, an image conversation function, an electric notebook function, a voice and image storing function, an internet function, and an entertainment function, and the like.

Here, a portable terminal includes an image photographing unit for photographing image and a display unit for displaying the image photographed using the image photographing unit. Generally, as the image photographing unit, a Charge Coupled Device (CCD) or a Complementary Metal Oxide Semiconductor (CMOS) sensor is used and as the display unit, a Liquid Crystal Display (LCD) or Organic Light Emitting Diodes (OLED) is used.

Meanwhile, in the portable terminal, when an image is photographed by as user, using the image photographing unit, the photographed image is stored in a memory provided in the portable terminal wherein the user may store the image stored in a memory in a personal computer, or transmit it to other persons.

However, in order to store the image photographed by a portable terminal in a personal computer, the portable terminal has to be connected to the personal computer by using a USB port, etc., and the image stored in the portable terminal has to be moved to the personal computer. Further, in order to transmit the image stored in a memory of the portable terminal to a person, a telephone number of the person who is to receive the image has to be input to the portable terminal and then transmit the image to his/her portable terminal by using wireless communication.

Here, in case of the person who is not accustomed to using a portable terminal such as a child and an old person, it is difficult for him/her to move the image photographed by the portable terminal to a personal computer and further it is inconvenient for him/her to enter in a transmitting mode of the portable terminal and input another user' s telephone number in order to transmit the image to another user's portable terminal.

Meanwhile, there increase crimes against a weak person such as a child and a woman. In the case of child or woman, a vehicle number is to be photographed using a handy phone prior to riding on the vehicle, with hedging these crimes which may arise in future.

However, when a user of a portable terminal suffers abruptly crimes, it is difficult for him/her to photograph and transmit the crime image to a friend since several complicated procedures for photographing the crime image and sending it to a friend have to be performed. Accordingly, it is difficult to solve the crime after the crime occurs and further a criminal knows well that when power of a portable terminal is cut off, any information about the crime is not provided from the portable terminal, and thus crime prevention effect is slight.

The description provided above as a related art is just for helping understanding the background of the present invention and should not be construed as being included in the related art known by those skilled in the art.

### SUMMARY OF THE DISCLOSURE

The present invention has been made in an effort to solve the above-described problems associated with prior art.

The present invention has been proposed to solve the drawbacks and an object of the present invention relates to provide a portable terminal and a managing method of the image photographed in the portable terminal, capable of transmitting easily the image photographed in the portable terminal to a personal computer or a portable terminal of other users, even in case of a child or old people who is not accustomed to using the portable terminal.

Another object of the present invention relates to provide a managing method of the image photographed in the portable terminal, capable of helping to prevent and solve the crime by remaining briefly a movement path of a child or woman on a web server or a portable terminal of other users.

A portable terminal according to an embodiment of the present invention includes an image photographing unit for photographing image, a storing unit for storing the image photographed in the photographing unit as image data, a transmission mode setup unit settable to an automatic transmission mode for automatically transmitting the image data to the address that is preset by a user when the user photographs the image, or a manual transmission mode for transmitting the image data to the address that is input later by a user after the image data is stored in the storing unit, a display unit for displaying the image data and a transmission mode set in the transmission setup unit, a wireless communication unit for transmitting the image data to the address through wireless communication, and the control unit controls the wireless communication unit such that when the automatic transmission mode is set in the transmission mode setup unit, the automatic transmission mode is stored in the storing unit as transmission mode setup data, the address preset in the automatic transmission mode is stored as setup address data, and image data is stored in the storing unit whenever a user photographs the image through the image photographing unit and at the same time is transmitted automatically to the setup address stored in the storing unit.

At this time, the address to which the image data is transmitted is called up from the address book data stored in the storing unit, and one or more addresses are input into the address book data.

Further, the address book data includes at least one of e-mail address, telephone number, and web server to which the image data can be uploaded.

Meanwhile, a GPS receiving unit for detecting a current location of the portable terminal from GPS signal is further provided, and the information of the location where the image is photographed in the portable terminal is sent together when the image data is sent in the portable terminal.

A managing method of the image photographed by a portable terminal according to an embodiment of the present invention includes selecting one of the automatic transmission mode for transmitting automatically the image photographed by a user to a preset address and a manual transmission mode for transmitting the image photographed to an address that is later input, inputting the address to which the photographed image is transmitted after a user selects the automatic transmission mode, storing the preset address in the automatic transmission mode as setup address data, photographing the image by a user and transmitting the photographed image to the stored setup address whenever the user photographs the image.

At this time, in a step of inputting the address to which the photographed image is transmitted, at least one address is called up from the address book storing in the portable terminal and inputted.

Further, in a step of transmitting the image photographed in the portable terminal to a preset address, the information of a location where the image is photographed in the portable terminal is transmitted together.

### BRIEF DESCRIPTION OF THE DRAWINGS

The above and other features of the present invention will now be described in detail with reference to certain exemplary embodiments thereof illustrated the accompanying drawings which are given hereinbelow by way of illustration only, and thus are not limitative of the present invention, and wherein:
FIG. 1 is a block diagram showing a portable terminal according to an embodiment of the present invention;
FIG. 2 is a view showing a managing method of the image photographed by the portable terminal shown in FIG. 1;
FIG. 3 is a view showing screens for setting a transmission mode in the portable terminal according to an embodiment of the present invention; and
FIG. 4 is a view showing a state entering into enters into a mode for photographing an object after an automatic transmission mode is set in a portable terminal according to an embodiment of the present invention.

It should be understood that the appended drawings are not necessarily to scale, presenting a somewhat simplified representation of various preferred features illustrative of the basic principles of the invention.

In the figures, reference numbers refer to the same or equivalent parts of the present invention throughout the several figures of the drawing.

### DETAILED DESCRIPTION

Hereinafter, a portable terminal and a managing method of image photographed by the portable terminal according to the embodiments will be described, referring to the accompanied drawings.

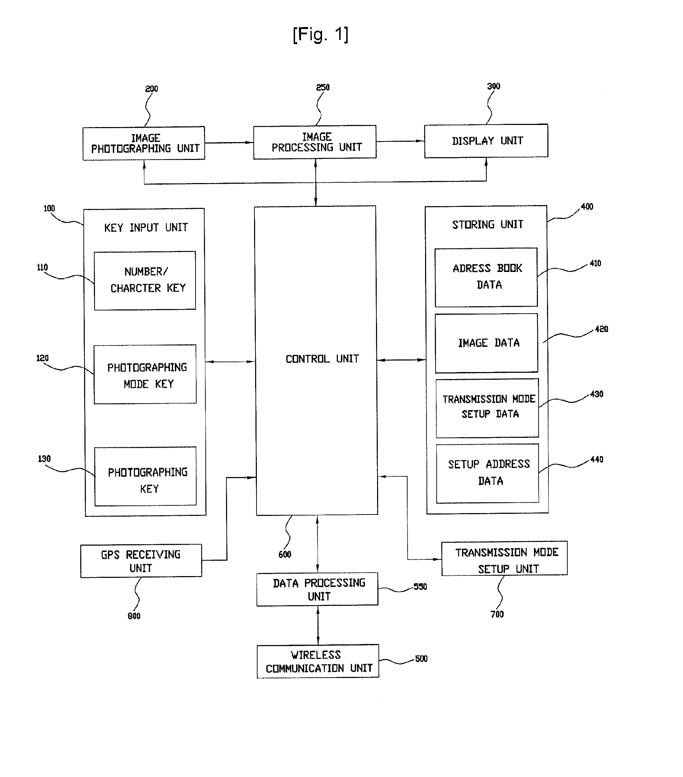

FIG. 1 is a block diagram showing a relation between constitutional elements provided in a portable terminal according to an embodiment of the present invention.

As shown in FIG. 1, the portable terminal according to an embodiment of the present invention includes a key input unit 100 provided with a plurality of keys 110 for inputting characters and numbers and a plurality of keys for controlling the portable terminal, an image photographing unit 200 for photographing the image using light incident through lens, a display unit 300 for displaying various menus and the image photographed in the image photographing unit 200, a storing unit 400 for storing various data, a wireless communication unit 500 for sending and receiving various voice data and image data through wireless communication, and a control unit 600 for controlling various devices provided in the portable terminal.

Here, the key input unit 100 includes a number/character input key 110 for inputting number/character, a photographing mode key 120 for the control unit 600 to operate the photographing unit 200 and order to enter into a mode for photographing the image, and a photographing key 130 for the control unit 600 to operate the photographing unit 200 and order to photograph the image.

Meanwhile, a user may input characters or numbers using the number/character input key 110, the photographing mode key 120 and the photographing key 130 provided in the key input unit 100, and perform various works such as making an order for controlling the image photographing unit 200.

The image photographing unit 200 photographs the image using the light incident through lens wherein it photographs the image through converting a light signal into an electrical signal. Here, in order to convert the light signal into the electrical signal, an image sensor is used wherein a Charge Coupled Device (CCD) or a Complementary Metal Oxide Semiconductor (CMOS) may be used as the image sensor in the present embodiment.

The display unit 300 displays various menus used in the portable terminal and the image photographed in the image photographing unit 200. Here, a Liquid Crystal Display (LCD) or Organic Light Emitting Diodes may be used in the display unit 300.

Further, the display unit 300 may be a touch screen-type wherein it may be implemented as a static pressure-type screen or electrostatic-type screen.

In the display unit 300 as described-above, other screens are displayed in accordance to the menus selected by a user. Here, when a user touches the photographing mode key 120, the image photographed in the image photographing unit 200 is reviewed so the user may determine whether to photograph the image displayed on the display unit 300 using the photographing key 130.

Meanwhile, the portable terminal according to an embodiment of the present invention further includes an image processing unit 250 for converting the image signal output from the image photographing unit 200 into image data in order for the image photographed in the image photographing unit 200 to be displayed on the display unit 300. The image processing unit 250 processes the image signal output from the image photographing unit at a frame unit and outputs the frame image data, corresponding to a display feature and size of the display unit 300. Further, the image processing unit 250 is provided with an image codec for compressing the frame image data that is displayed on the display unit 300 in a presetting manner and recovering the compressed frame image data to an original image data.

The portable terminal according to an embodiment of the present invention is provided with a storing unit 400 for storing information and data.

The storing unit 400 stores address book data 410 into which address information of the persons who use a portable terminal is stored, image data 420 into which the image photographed in the image photographing unit 200 is data-processed and stored, transmission mode setup data 430 into which the information of a transmission mode set in later described-transmission mode setup unit 700 is stored; and setup address data 440 into which the address set by a user when the user selects an automatic transmission mode in the transmission mode is stored.

Meanwhile, the portable terminal is provided with a data processing unit 550 for processing the data that is sent and received through a wireless communication unit. The data processing unit 550 may include a sending module for encoding and modulating the signal to be sent through a wireless communication and a receiving module for encoding and modulating the signal received through a wireless communication. The data processing unit 550 demodulates the data being received, provides it to the control unit 600, and modulates the data to be transmitted in accordance to the control by the control unit 600 and outputs it to a wireless communication unit 500.

The wireless communication unit 500 serves to send and receive the data for wireless communication in the portable terminal. The wireless communication unit 500 includes a RF sender for increased-converting and amplifying the frequency of the signal to be sent and a RF receiver for low-noise-amplifying and decreased-converting the frequency of the signal to be received. Further, the wireless communication unit 500 receives the image data photographed in the image photographing unit 200 and outputs it to the data processing unit 550 through wireless communication, and receives the image data output from the data processing unit 550 and transmits it to the input address.

Meanwhile, the portable terminal is provided with a transmission mode setup unit 700 settable to an automatic transmission mode for automatically transmitting the image data to the address that is preset by a user, when the user photographs the image, or a manual transmission mode for transmitting the image data to the address that is input later by a user after the image data is stored in the storing unit 410.

When a user selects the automatic transmission mode in the transmission mode setup unit 700, the image data is transmitted automatically to the preset address by the user at the same time when the user photographs the image. For example, in case where a user presets e-mail address which has used by himself/herself for the image data to be transmitted automatically thereto, the user may connect to the e-mail and downloads the transmitted-image data in a personal computer, thereby storing easily the image photographed by a portable terminal in the personal computer.

Meanwhile, the mode set in the transmission mode setup unit 700 by a user is to be stored in the storing unit 400 as the transmission mode setup data and further the address preset in the automatic transmission mode is to be stored as the setup address data 440.

Further, a GPS receiving unit 800 may be further provided in the portable terminal for detecting a current location from GPS signal. Through the GPS receiving unit 800, when the image data photographed in the portable terminal by a user is sent, the information of a location where the image is photographed in the portable terminal is transmitted together.

Meanwhile, the control unit 600 controls the image photographing unit 200, the image processing unit 250, the display unit 300, the storing unit 400, the wireless communication unit 500, the data processing unit 550 and the transmission mode setup unit 700, which are mounted in the portable terminal.

Specially, the control unit 600 controls the wireless communication unit 500 such that when the automatic transmission mode is set in the transmission mode setup unit 700, the image data is stored in the storing unit 400 and at the same time is transmitted automatically to the address preset by a user.

Here, the address preset by a user may be e-mail address, telephone number, that are provided in the address book data 410 stored in the storing unit 400, or web server to which the image data can be uploaded.

In addition, a user may input directly e-mail address, telephone number and web server information to which the image data can be uploaded through the number/character key 110 as the preset address. Here, the information of the web server may include address information of a personal homepage linked with internet or a site to which data can be uploaded through internet.

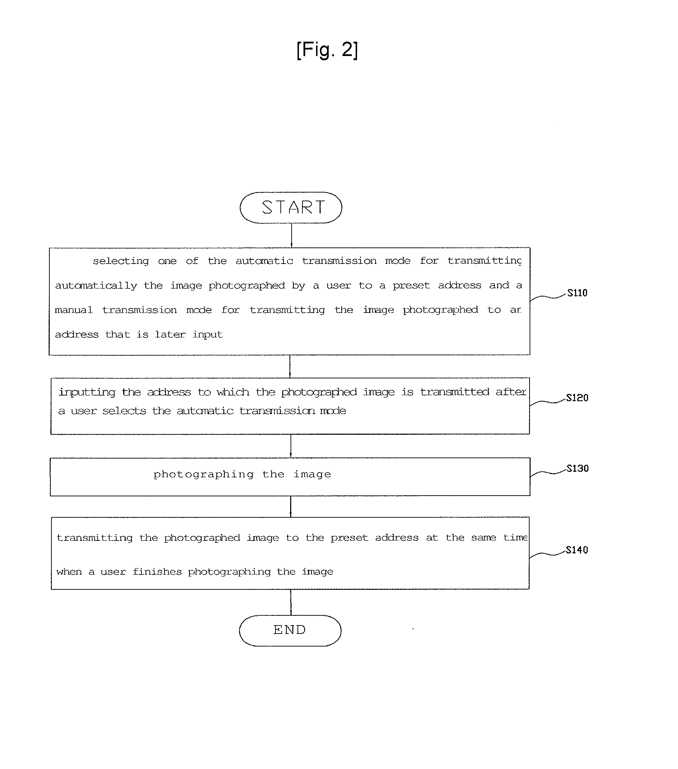

FIG. 2 is a view showing a managing method of the image photographed by the portable terminal shown in FIG. 1.

As shown in FIG. 2, the managing method of the image photographed by the portable terminal according to an embodiment of the present invention includes mode-selecting one of the automatic transmission mode for transmitting automatically the image photographed by a user to a preset address and a manual transmission mode for transmitting the image photographed to an address that is later input (S110), inputting the address to which the photographed image is transmitted after a user selects the automatic transmission mode (S120), photographing the image (S130), and transmitting the photographed image to the preset address at the same time when a user finishes photographing the image (S140).

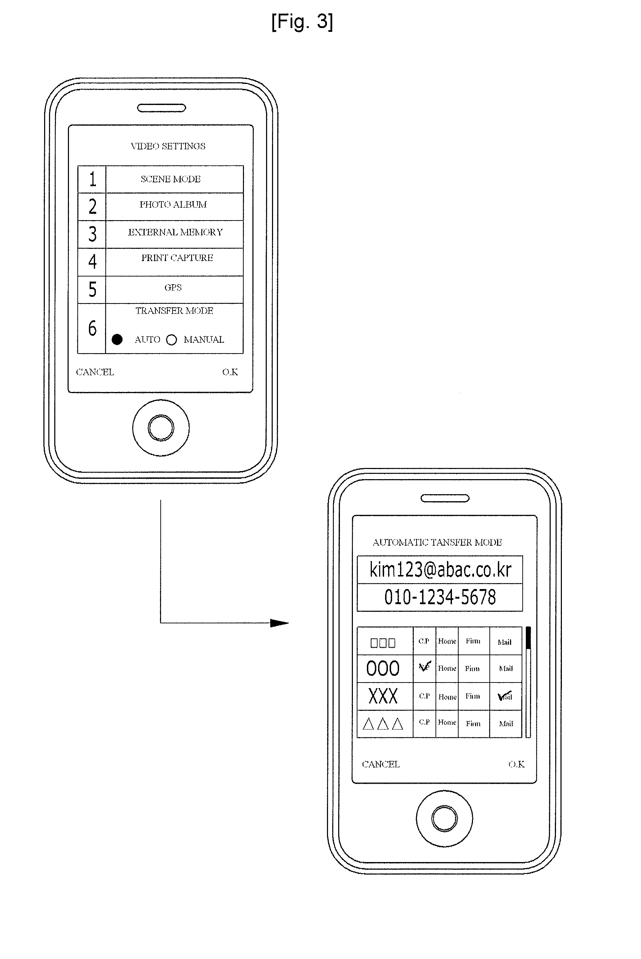

FIG. 3 is a view showing a transmission setup method in the portable terminal according to an embodiment of the present invention, and hereinafter, the transmission setup method in the portable terminal will be described, referring to FIG. 3.

As shown in FIG. 3, a user may set the transmission mode in the image photographing setup menus.

At this time, when the transmission mode is set automatically and a confirmation button is pushed, a screen which can call up the address book data 420 containing the information of the e-mail address, telephone number and web server to which image data can be uploaded, appears, and a user may select the address on the address book data 420, to which the image photographed through the image photographing unit 200 is transmitted.

In a state of the address being selected as described-above, when a confirmation button is pushed, the address to which the photographed image is transmitted is stored in the storing unit 400 as the setup address data 440 at the same time when a user photographs an object.

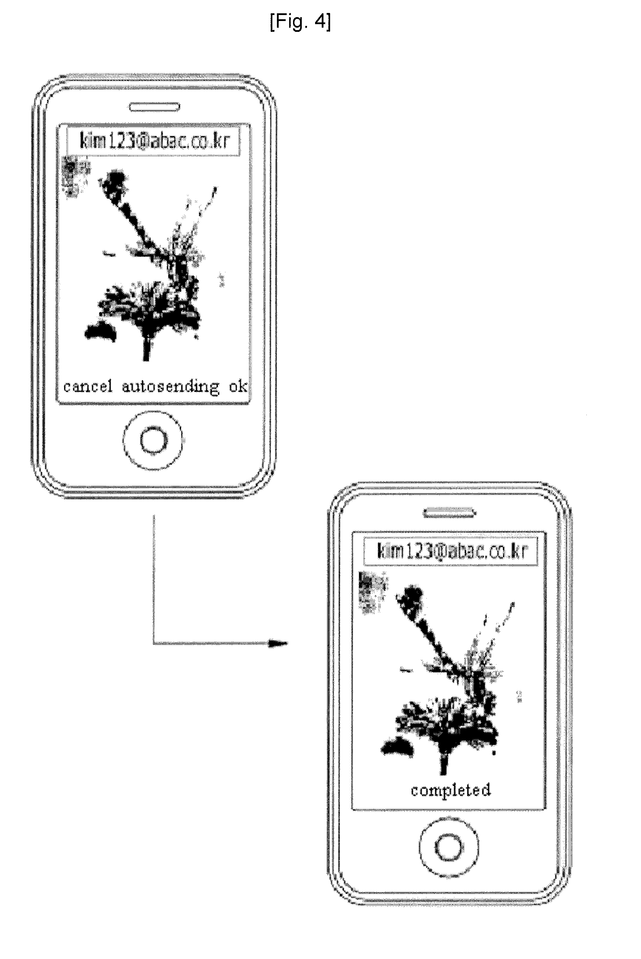

FIG. 4 is a view showing a state entering into a mode for photographing an object by pushing the photographing mode key 120 after an automatic transmission mode is set in a portable terminal according to an embodiment of the present invention.

As shown in FIG. 4, when a user sets an automatic transmission mode and then enters into a mode for photographing an object, the image photographed in the image photographing unit 200 is pre-reviewed on the display unit 300 and at the same time a notice of the automatic transmission mode being set is displayed on the display unit 300. Further, the address to which the image photographed in the image photographing unit 200 is transmitted is displayed on the display unit 300.

In case where the mode for photographing an object is set in the portable terminal as described-above, when a user pushes the photographing key 130, the image displayed through the display unit 300 is stored in the storing unit 400 as image data and at the same time is transmitted to the setup address stored in the storing unit 400.

At this time, the title of the image data to be stored in the storing unit 400 is set as a date on which the image is photographed. For example, when the image is photographed on May 5, 2010, the image data may be stored in the storing unit 400 as titled of consecutive number starting from 20100505-1.

At this time, a current location of the portable terminal is detected in the GPS receiving unit 800 and the information of the location where the image is photographed by the portable terminal is transmitted together when the image data photographed by a user is sent in the portable terminal.

Accordingly, when a user photographs a vehicle number or surroundings using a portable terminal, the photographed image is transmitted automatically to e-mail and the information of the location where the image is photographed in the portable terminal remains in the transmitted picture, and thus when a person who uses a portable terminal is in danger of crime, the user of the portable terminal may be traced to solve easily the crime.

Through a portable terminal and a managing method of the images photographed by the portable terminal according to an embodiment of the present invention, a user can transmit easily the image photographed by a portable terminal to a personal computer or a portable terminal of other persons.

Further, as a user photographs the image using a portable terminal according to an embodiment of the present invention, the information of the photographed image is sent continuously to a preset address so that when the crime occurs, it can be solved easily, and help to prevent a crime by reminding a criminal of the fact that even he/she commits a crime, he/she is to be easily arrested.

While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

## Claims

1. A portable terminal comprising:
an image photographing unit for photographing image;
a storing unit for storing the image photographed in the photographing unit as image data;
a transmission mode setup unit settable to an automatic transmission mode for automatically transmitting the image data to the address that is preset by a user when the user photographs the image, or a manual transmission mode for transmitting the image data to the address that is input later by a user after the image data is stored in the storing unit;
a display unit for displaying the image data and the transmission mode set in the transmission setup unit;
a wireless communication unit for transmitting the image data to the address through wireless communication; and
the control unit controls the wireless communication unit such that when the automatic transmission mode is set in the transmission mode setup unit, the automatic transmission mode is stored in the storing unit as transmission mode setup data, the address preset in the automatic transmission mode is stored as setup address data, and image data is stored in the storing unit whenever a user photographs the image through the image photographing unit and at the same time is transmitted automatically to the setup address stored in the storing unit.

2. The portable terminal of claim 1, wherein the address to which the image data is transmitted is called up from the address book data stored in the storing unit.

3. The portable terminal of claim 2, wherein one or more addresses are input into the address book data.

4. The portable terminal of claim 1, wherein the address book data comprises at least one of e-mail address, telephone number, and web server to which the image data can be uploaded.

5. The portable terminal of claim 1, further comprising a GPS receiving unit for detecting a current location of the portable terminal from GPS signal wherein the information of the location where the image is photographed in the portable terminal is sent together when the image data is sent in the portable terminal.

6. A managing method of the image photographed by a portable terminal, comprising: selecting one of the automatic transmission mode for transmitting automatically the image photographed by a user to a preset address and a manual transmission mode for transmitting the image photographed to an address that is later input; inputting the address to which the photographed image is transmitted after a user selects the automatic transmission mode; storing the preset address in the automatic transmission mode as setup address data; photographing the image by a user and transmitting the photographed image to the stored setup address whenever the user photographs the image.

7. The managing method of the image photographed by a portable terminal of claim 6, wherein in a step of inputting the address to which the photographed image is transmitted, at least one address is called up from the address book storing in the portable terminal and inputted.

8. The managing method of the image photographed by a portable terminal of claim 6, wherein in a step of transmitting the image photographed in the portable terminal to a preset address, the information of a location where the image is photographed in the portable terminal is transmitted together.
